Europäisches Patentamt

European Patent Office

Office européen des brevets

(19)

(11) EP 0 725 406 B1

(12) EUROPÄISCHE PATENTSCHRIFT

(45) Veröffentlichungstag und Bekanntmachung des Hinweises auf die Patenterteilung:
10.03.1999 Patentblatt 1999/10

(51) Int Cl.$^6$: G21C 19/317

(21) Anmeldenummer: 96100641.8

(22) Anmeldetag: 18.01.1996

(54) **Verfahren und Vorrichtung zum Absaugen der Kondensatorabgase eines Siedewasserreaktors**

Method and apparatus for recombining hydrogen and oxygen gases from the main condenser in a boiling water nuclear reactor

Procédé et appareil pour recombiner l'hydrogène et l'oxygène du condenseur principal d'un réacteur nucléaire à eau bouillante

(84) Benannte Vertragsstaaten:
BE CH DE ES FR GB LI SE

(30) Priorität: 03.02.1995 DE 19503541

(43) Veröffentlichungstag der Anmeldung:
07.08.1996 Patentblatt 1996/32

(73) Patentinhaber: ASEA BROWN BOVERI AG
5400 Baden (CH)

(72) Erfinder:
• **Blangetti, Francisco, Dr.**
  **CH-5400 Baden (CH)**
• **Galvagno, Alfredo**
  **CH-4600 Olten (CH)**

(56) Entgegenhaltungen:
EP-A- 0 338 678      US-A- 3 660 041
US-A- 4 430 292

## Beschreibung

### Technisches Gebiet

Die Erfindung betrifft ein Verfahren und eine Vorrichtung zum Absaugen der Kondensatorabgase eines Siedewasserreaktors von Kernkraftwerken.

### Stand der Technik

In den Reaktorbehältern von Kernkraftanlagen entsteht durch Gammastrahlung auf die Wassermoleküle nach folgender Bruttoreaktion ein bestimmter Anteil an Wasserstoff und Sauerstoff im stöchiometrischen Verhältnis:

$$H_2O(l) \rightleftharpoons H_2(g) + \tfrac{1}{2}O_2.$$

Das resultierende Gasgemisch ist unter dem Namen Knallgas bekannt. Es explodiert beim Erreichen seiner Detonationsgrenze (ca. 7% im Molanteil von $H_2$ (g)) durch die katalytische Wirkung bestimmter metallischer Stoffe aber auch durch Funkenbildung.

Der Wasserdampf aus dem Reaktor enthält somit einige Promille an Gasen aus der Zersetzung des Wassers, der sogenannten Radiolyse. Im Gegensatz zu Kernkraftwerken des Druckwassertyps erfolgt bei solchen mit Siedewasserreaktoren keine Trennung zwischen dem Wasser des primären und des sekundären Kreislaufes, so dass der Wasserdampf die Turbine durchströmt. Er gelangt nach seiner Expansionsarbeit in den Kondensator. Weil der Druck bereits in der Niederdruckturbine, d.h. vor dem Kondensatoreintritt, unter dem Umgebungsdruck liegt, erfolgt unvermeidlich ein Lufteinbruch in den Kondensator. Somit besteht das in diesen eintretende Gasgemisch hauptsächlich aus dem Wasserdampf, den Radiolysegasen und der Umgebungsluft.

Durch das während der Kondensation erfolgende Abstrippen des Gemisches steigt die Konzentration der nicht kondensierbaren Komponenten entlang des Kondensationsweges. Auf diese Weise erhöht sich die Konzentration des Knallgases. Aus Sicherheitsgründen werden derartige Anlagen so ausgelegt, dass die Endkonzentration am Austritt des Kondensators den Wert von 0,04% Molanteil an $H_2(g)$ nicht übersteigt.

Damit auch in der Saugpumpe die Konzentration des Knallgases, d.h. die Gefahr von Explosionen nicht ansteigt, ist zwischen dieser und dem Kondensator ein Rekombinator angeordnet. Dieser mit einem Katalysator gefüllte Behälter überführt den Wasserstoff und den Sauerstoff durch katalytische Verbrennung zu Wasser und zwar unter kontrollierten Bedingungen sowie unterhalb der Detonationsgrenze. Da diese Reaktion stark exergetisch ist, benötigt der Katalysator bei normalem Betrieb keine fremde Heizung.

Um die Rekombination auch bei sehr verdünnten Gasmischungen zu sichern und die Reaktion beim Anfahren zu beschleunigen, wird der Katalysator dennoch vorgewärmt. Das geschieht mit einem, dem Rekombinator vorgeordneten, sogenannten Preheater. Dieser heizt die vom Kondensator kommenden Gase vor ihrer Einleitung in den Rekombinator auf, was innerhalb des Preheaters durch Wärmetausch mit von der Turbine abgezweigtem Heizdampf realisiert wird.

Aus Sicherheitsgründen muss eine solche Vorrichtung redundant ausgebildet sein. Deshalb steht neben dem ersten stets ein zweites Absaugsystem in Bereitschaft (stand-by), auf das bei Bedarf umgeschaltet werden kann. Damit der Katalysator beim Umschalten sofort einsatzfähig ist, muss natürlich auch der Rekombinator des jeweiligen Reservesystems ständig auf eine Temperatur von ca. 150°C vorgeheizt werden. Diese Aufgabe übernimmt im stand-by-Zustand eine elektrische Heizung. Dazu müssen entweder elektrische Wicklungen angebracht oder eine elektrisch geheizte Ummantelung des Rekombinators, des Preheaters und der anliegenden Komponenten verlegt werden.

Eine solche elektrische Heizung weist jedoch eine ganze Reihe von Nachteilen auf. Sie muss geerdet und nach aussen isoliert werden, was neben einem komplizierten Aufbau auch hohe Kosten zur Folge hat. Ausserdem besteht latent die Gefahr von Funkenbildung durch beschädigte Heizelemente. Da die Wärme nach innen praktisch nur über Leitungen übertragen wird, dauert das relativ lange und führt zudem zu einer ungleichmässigen Wärmeverteilung. Schliesslich muss die elektrische Heizung aufgrund der Vielzahl von Ein- und Ausgängen der beheizten Bauteile getrennt gespeist werden, was sowohl die Montage als auch die Demontage des Absaugsystems erheblich erschwert.

Nach dem Umschalten des Siedewasserreaktors auf das zweite Absaugsystem ist es unbedingt erforderlich, dass der Katalysator des ersten Absaugsystems vorgeheizt werden kann. Deshalb wird natürlich auch für dieses Absaugsystem eine elektrische Heizung benötigt. Damit erhöhen sich jedoch der Aufwand und die damit verbundenen Kosten weiter.

### Darstellung der Erfindung

Die Erfindung versucht, all diese Nachteile zu vermeiden. Ihr liegt die Aufgabe zugrunde, eine einfache, kostengünstige und sichere Vorrichtung zum Absaugen der Kondensatorabgase eines Siedewasserreaktors schaffen. Ausserdem soll ein Verfahren zum Betrieb der Vorrichtung angegeben werden.

Erfindungsgemäss wird dies dadurch erreicht, dass bei einer Vorrichtung gemäss dem Oberbegriff des Anspruchs 1, am Absperrorgan der Hilfs-Dampfschiene ein dieses umgehender Bypass angeordnet ist. Im Entlüftungsrohr ist ein Drosselelement stromab der Entlüftungsblenden angeordnet. Das Entlüftungsrohr ist mit dem Rekombinator wirkverbunden.

Die Vorteile der Erfindung liegen darin begründet, dass der Katalysator des zweiten, im stand-by-Zustand befindlichen, Absaugsystems mit einer billigeren Wärmequelle, nämlich dem ohnehin an der Hilfs-Dampfschiene anliegenden Heizdampf, beheizt werden kann. Die elektrische Heizung kann damit entfallen, was eine einfache, kostengünstige und sichere Vorrichtung zum Absaugen der Kondensatorabgase zur Folge hat. Ausserdem findet die Wärmeübertragung innerhalb des Preheaters, ausschliesslich durch Zwangskonvektion und in direktem Kontakt statt, so dass der Prozess wesentlich schneller und gleichmässiger verläuft.

Es ist besonders zweckmässig, wenn das Drosselelement als Mehrfachdrossel, bestehend aus einer seriellen Schaltung exzentrisch angeordneter Blenden, ausgebildet ist. Bei einer solchen Mehrfachdrossel wird der Heizdampf mäandernd durch die Blenden geleitet und erfährt daher eine besonders starke Abbremsung. Auf diese Weise lässt sich der Druck des im Preheater befindlichen Heizdampfes besser auf den im Rekombinator herrschenden Druck herunterfahren.

Beim Betrieb des Siedewasserreaktors mit dem ersten Absaugsystem wird ständig eine kleine Menge Heizdampf am in der Hilfs-Dampfschiene des zweiten Absaugsystems angeordneten Absperrorgan vorbeigeführt und in den Preheater eingeleitet. Dieser Heizdampf wird im Preheater durch Expansion stark aufgeheizt und anschliessend auf den im Rekombinator herrschenden Druck gedrosselt. Der stark erhitzte Heizdampf wird in den Rekombinator eingeleitet und heizt diesen somit vor. Danach wird der Heizdampf im nachgeordneten Abgaskondensator niedergeschlagen und von dort aus in den Hauptkondensator zurückgeführt.

Im Preheater expandiert der Heizdampf um etwa zwei Grössenordnungen, was zu seiner enormen Überhitzung führt. Dadurch können sogar Temperaturen von ca. 170°C erreicht werden. Deshalb bleibt das gesamte im stand-by-Zustand befindliche Absaugsystem trocken und kann vorteilhaft mit heissem Dampf gespült werden. Beim Umschalten des Siedewasserreaktors auf das zweite Absaugsystem sichert die hohe Temperatur des vorgeheizten Katalysators auch die sofortige Rekombination der Radiolysegase und verhindert damit die Konzentration von Knallgas.

## Kurze Beschreibung der Zeichnung

In der Zeichnung ist ein Ausführungsbeispiel der Erfindung anhand der Absaugsysteme für die Kondensatorabgase eines Siedewasserreaktors dargestellt.
Es zeigen:

Fig. 1  eine schematische Darstellung des ersten, aktiv betriebenen Absaugsystems;

Fig. 2  einen Längsschnitt des Preheaters;

Fig. 3  Schnitt III-III durch das Entlüftungsrohr und die Übertragungsrohre des Preheaters, entsprechend Fig. 2, vergrössert dargestellt,

Fig. 4  einen vergrösserte Darstellung der in Fig. 2 gezeigten Mehrfachdrossel,

Fig. 5  eine schematische Darstellung des zweiten, im stand-by-Zustand befindlichen Absaugsystems.

Es sind nur die für das Verständnis der Erfindung wesentlichen Elemente gezeigt. Die Strömungsrichtung der Arbeitsmittel ist mit Pfeilen bezeichnet.

## Weg zur Ausführung der Erfindung

Am Siedewasserreaktor 1 eines Kernkraftwerkes sind eine Turbine 2 sowie ein Hauptkondensator 3 angeschlossen und über eine Abdampfleitung 4 miteinander verbunden. Zum Absaugen der Kondensatorabgase 5 ist der Hauptkondensator 3 mit einem ersten und einem zweiten Absaugsystem 6, 7 verbunden, von denen eines ständig in Betrieb ist und das andere als Reserve bereitsteht (stand-by). Beide Absaugsysteme 6, 7 sind gleich ausgebildet.

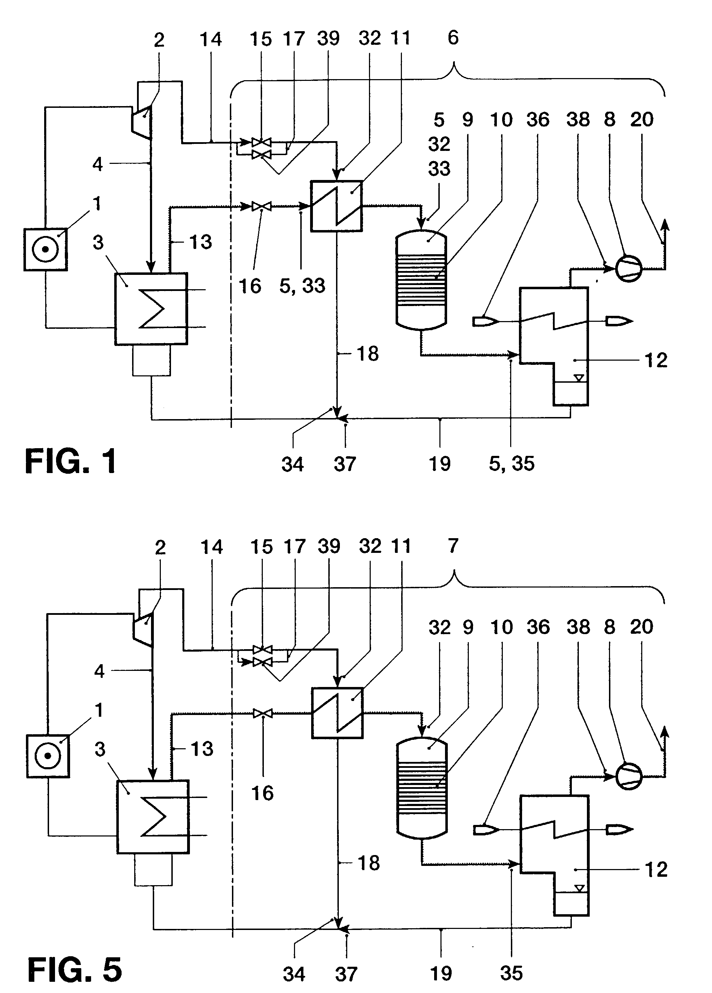

In Figur 1 ist das in Betrieb befindliche erste Absaugsystem 6 dargestellt. Es besteht aus einer Saugpumpe 8, welche über einen $H_2$-$O_2$-Rekombinator 9, der einen Platin-Palladium-Katalysator 10 enthält, am Hauptkondensator 3 angeschlossen ist. Dem Rekombinator 9 ist ein Preheater 11 vor- und ein Abgaskondensator 12 nachgeschaltet. Der Preheater 11 ist über eine Saugerleitung 13 mit dem Hauptkondensator 3 und über eine Hilfs-Dampfschiene 14 mit der Turbine 2 verbunden. Sowohl in der Hilfs-Dampfschiene 14 als auch in der Saugerleitung 13 ist jeweils ein als Stellventil ausgebildetes Absperrorgan 15, 16 angeordnet. Das in der Hilfs-Dampfschiene 14 befindliche Stellventil 15 weist einen Bypass 17 auf. Vom Preheater 11 und vom Abgaskondensator 12 verläuft jeweils eine Kondensatleitung 18, 19 zum Hauptkondensator 3. Die Saugerleitung 13 führt, ausgehend vom Hauptkondensator 3, durch den Preheater 11, den Rekombinator 9, den Abgaskondensator 12 und die Saugpumpe 8, zu einem Abgasaustritt 20.

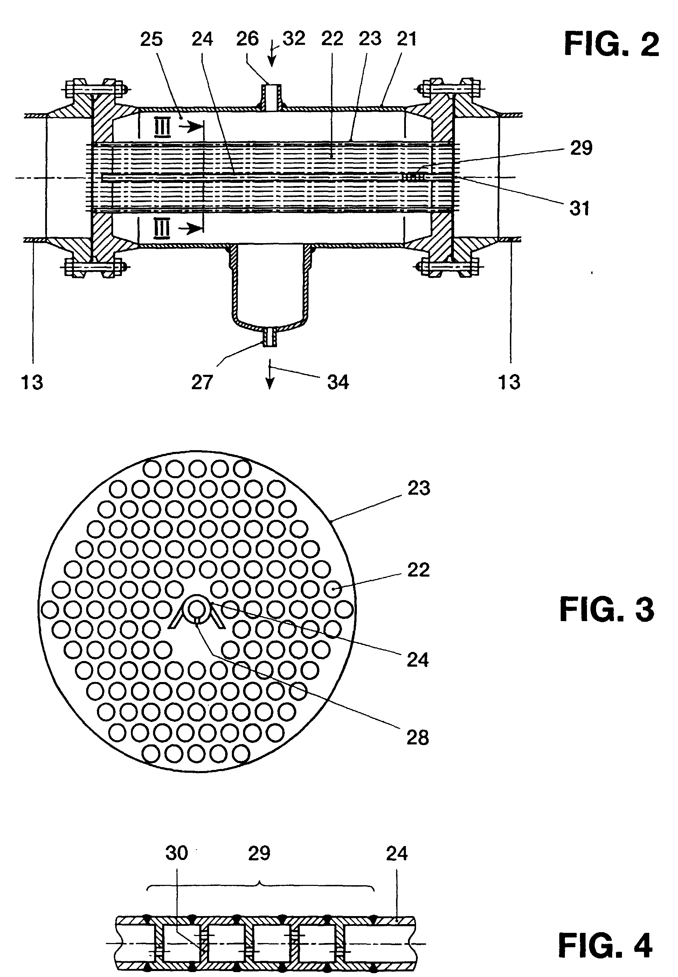

Der Preheater 11 besteht aus einem zylindrischen Gehäuse 21, welches an beiden Stirnseiten mit der Saugerleitung 13 verbunden ist (Fig. 2). Im Inneren des Gehäuses 21 ist ein aus mehreren koaxial angeordneten Wärmeübertragungsrohren 22 bestehendes Rohrbündel 23 angeordnet. Die Wärmeübertragungsrohre 22 reichen bis an beide Stirnseiten des Gehäuses 21 und nehmen ein zentrales Entlüftungsrohr 24 in sich auf. Innerhalb des Gehäuses 21 und ringsum das Rohrbündel 23 ist ein Dampfverteilungsraum 25 ausgebildet, der über einen Heizdampf-Eintritt 26 mit der Hilfs-Dampfschiene 14 sowie über einen Kondensat-Austritt 27 mit der Kondensatleitung 18 in Verbindung steht. Im Entlüftungsrohr 24 sind mehrere Entlüftungsblenden 28 ausgebildet, welche dieses mit dem Dampfverteilungsraum 25 verbinden (Fig. 3, Fig. 2). Stromab der Entlüftungsblenden 28 ist im Entlüftungsrohr 24 ein als Mehrfachdrossel ausgebildetes Drosselelement 29 angeordnet. Diese Mehrfachdrossel 29 besteht aus einer seriellen Schaltung exzentrisch angeordneter Blenden 30 (Fig. 4). Das Entlüftungsrohr 24 ist in Richtung des Hauptkondensators 3 geschlossen, weist jedoch zum Rekombinator 9 eine Öffnung 31 auf (Fig. 2).

Während des Betriebs des Siedewasserreaktors 1 ist sowohl der Hauptkondensator 3 als auch die Turbine 2 ständig mit einem der beiden Absaugsysteme 6, 7 wirkverbunden. Wenn das erste Absaugsystem 6, wie bereits oben beschrieben, aktiv ist, sind dessen Stellventile 15, 16 geöffnet (Fig. 1). Die Stellventile 15, 16 des zweiten Absaugsystems 7 bleiben dann geschlossen (Fig. 5).

Dadurch dringen über die Hilfs-Dampfschiene 14 Heizdampf 32 und über die Saugerleitung 13 Kondensatorabgase 5, welche unter anderem Radiolysegase 33 mit sich führen, in den Preheater 11 des ersten Absaugsystems 6 ein. Dort werden die im Hauptkondensator 3 auf ca. 50°C abgekühlten Kondensatorabgase 5 durch Wärmetausch mit dem von der Turbine 2 abgezweigten Heizdampf 32 erneut aufgeheizt und erreichen so eine Temperatur von über 150°C. Dabei kondensiert der Heizdampf 32 und es bildet sich ein Kondensat 34, welches über die Kondensatleitung 18 zum Hauptkondensator 3 zurückgeführt wird. Anschliessend treten sowohl die nunmehr aufgeheizten Kondensatorabgase 5, einschliesslich der Radiolysegase 33, als auch im Preheater nicht niedergeschlagener Heizdampf 32 über die Saugerleitung 13 in den Rekombinator 9 ein. Aufgrund der dort herrschenden hohen Temperaturen erfolgt trotz kurzer Verweildauer eine katalytische Verbrennung des grössten Teils der in den Kondensatorabgasen 5 enthaltenen Radiolysegase 33 zu Wasser. Der entstandene Dampf 35 wird gemeinsam mit den restlichen Kondensatorabgasen 5 über die Saugerleitung 13 in den Abgaskondensator 12 eingeleitet. Dort erfolgt ein erneuter Wärmetausch mit als Kühlmedium 36 verwendetem Wasser. Dabei entsteht ein weiteres Kondensat 37, welches über die Kondensatleitung 19 ebenfalls zum Hauptkondensator 3 zurückgeführt wird. Der dann noch bestehende, relativ geringe Anteil an Abgasen 38 wird von der Saugpumpe 8 abgesaugt und über den Abgasaustritt 20 an die Umgebungsluft abgegeben.

Das im stand-by-Zustand befindliche zweite Absaugsystem 7 erhält währenddessen über seinen Bypass 17 ständig eine kleine Menge Heizdampf 32 aus der Hilfs-Dampfschiene 14 (Fig. 5). Zu diesem Zweck ist der Bypass 17 so ausgebildet, dass er etwa 5 Gramm Heizdampf 32 pro Sekunde durchlässt. Dazu kann auch ein Stellventil 39 im Bypass 17 angeordnet sein. Der Druck des an der Hilfs-Dampfschiene 14 anliegenden Heizdampfes 32 beträgt etwa 10 bis 15 bar. Nach dem Eindringen in den Preheater 11 expandiert der Heizdampf 32 über die Entlüftungsblenden 28 und wird durch die Mehrfachdrossel 29 bis auf den im Rekombinator 9 herrschenden Druck gedrosselt. Aufgrund der mehrfach hintereinander und exzentrisch angeordneten Blenden 30 wird der Heizdampf 32 mäandernd durch das Drosselelement 29 geleitet und erfährt daher eine besonders starke Abbremsung. Bei seiner Expansion um zwei Grössenordnungen wird der Heizdampf 32 enorm überhitzt und erreicht eine Temperatur von über 150°C. Mit dieser Temperatur wird der Katalysator 10 des zweiten Absaugsystems 7 ständig vorgeheizt, so dass beim Umschalten auf dieses Absaugsystem 7 die Rekombination der Radiolysegase 33 sofort gewährleistet ist.

Der stark erhitzte Heizdampf 32 wird im nachgeordneten Abgaskondensator 12 niedergeschlagen und das Kondensat 37 in den Hauptkondensator 3 zurückgeführt.

Soll der Siedewasserreaktor 1 auf das zweite Absaugsystem 7 umgeschaltet werden, müssen lediglich die Stellventile 15, 16 des ersten Absaugsystems 6 geschlossen und gleichzeitig die Stellventile 15, 16 des zweiten Absaugsystems 7 geöffnet werden.

**Bezugszeichenliste**

1 Siedewasserreaktor
2 Turbine
3 Hauptkondensator
4 Abdampfleitung
5 Kondensatorabgase
6 Absaugsystem, erstes
7 Absaugsystem, zweites
8 Saugpumpe
9 $H_2$-$O_2$-Rekombinator, Rekombinator
10 Platin-Palladium-Katalysator, Katalysator
11 Preheater
12 Abgaskondensator
13 Saugerleitung
14 Hilfs-Dampfschiene
15 Absperrorgan, Stellventil
16 Absperrorgan, Stellventil
17 Bypass
18 Kondensatleitung
19 Kondensatleitung
20 Abgasaustritt
21 Gehäuse
22 Wärmeübertragungsrohr
23 Rohrbündel
24 Entlüftungsrohr
25 Dampfverteilungsraum
26 Heizdampf-Eintritt
27 Kondensat-Austritt
28 Entlüftungsblende
29 Drosselelement, Mehrfachdrossel
30 Blende
31 Öffnung
32 Heizdampf

33 Radiolysegase
34 Kondensat
35 Dampf
36 Kühlmedium
37 Kondensat
38 Abgas
39 Stellventil

**Patentansprüche**

1. Vorrichtung zum Absaugen der Kondensatorabgase (5) eines Siedewasserreaktors (1), welche über zwei gleiche Absaugsysteme (6, 7) verfügt, von denen eines stets als Reserve bereitsteht, bestehend aus jeweils

 a) einem H$_2$-O$_2$-Rekombinator (9) mit integriertem Katalysator (10), einem nachgeschalteten Abgaskondensator (12) und einer mit diesem verbundenen Saugpumpe (8),
 b) einem dem Rekombinator (9) vorgeschalteten Preheater (11), der über eine Hilfs-Dampfschiene (14) mit einer Turbine (2) des Siedewasserreaktors (1) und über eine Saugerleitung (13) mit dem Hauptkondensator (3) verbunden ist,
 c) einem innerhalb des Preheaters (11) angeordneten Entlüftungsrohr (24) mit Entlüftungsblenden (28) für den Heizdampf (32) aus der Hilfs-Dampfschiene (14),
 d) einem in der Hilfs-Dampfschiene (14) und einem in der Saugerleitung (13) angeordneten Absperrorgan (15, 16)

 dadurch gekennzeichnet, dass

 e) am Absperrorgan (15) der Hilfs-Dampfschiene (14) ein dieses umgehender Bypass (17) angeordnet ist,
 f) im Entlüftungsrohr (24), stromab der Entlüftungsblenden (28), ein Drosselelement (29) angeordnet ist, und
 g) das Entlüftungsrohr (24) über eine Öffnung (31) mit dem Rekombinator (9) wirkverbunden ist.

2. Vorrichtung nach Anspruch 1, dadurch gekennzeichnet, dass das Drosselelement (29) als Mehrfachdrossel ausgebildet ist.

3. Vorrichtung nach Anspruch 2, dadurch gekennzeichnet, dass die Mehrfachdrossel (29) aus einer seriellen Schaltung von Blenden (30) besteht, welche exzentrisch angeordnet sind.

4. Vorrichtung nach Anspruch einem oder mehreren der Ansprüche 1 bis 3, dadurch gekennzeichnet, dass im Bypass (17) ein Stellventil (39) angeordnet ist.

5. Verfahren zum Absaugen der Kondensatorabgase (5) eines Siedewasserreaktors (1) nach Anspruch 1, bei dem

 a) das erste Absaugsystem (6) aktiv betrieben und das zweite Absaugsystem (7) als Reserve in Bereitschaft gehalten wird, wozu die Absperrorgane (15, 16) des ersten Absaugsystems (6) geöffnet und die des zweiten Absaugsystems (7) geschlossen sind,
 b) der Rekombinator (9) des ersten Absaugsystems (6) mittels der aus dem Hauptkondensator (3) einströmenden Kondensatorabgase (5) und diese durch Wärmetausch mit dem Heizdampf (32) der Hilfs-Dampfschiene (14) aufgeheizt wird, und
 c) der Rekombinator (9) des zweiten Absaugsystems (7) ständig vorgewärmt wird,

 dadurch gekennzeichnet, dass

 d) ständig eine kleine Menge Heizdampf (32) in den Preheater (11) des zweiten Absaugsystems (7) eingeleitet wird,
 e) dieser Heizdampf (32) im Preheater (11) durch Expansion stark aufgeheizt und anschliessend auf den im Rekombinator (9) herrschenden Druck gedrosselt wird,
 f) der stark erhitzte Heizdampf (32) in den Rekombinator (9) eingeleitet wird und diesen somit vorheizt,
 g) danach der Heizdampf (32) auf an sich bekannte Weise im nachgeordneten Abgaskondensator (12) niedergeschlagen und von dort aus in den Hauptkondensator (3) zurückgeführt wird.

6. Verfahren nach Anspruch 5, dadurch gekennzeichnet, dass die in den Preheater (11) eingeleitete kleine Menge Heizdampf (32) zuvor am in der Hilfs-Dampfschiene (12) des zweiten Absaugsystems (7) angeordneten Absperrorgan (15) vorbeigeleitet wird.

**Claims**

1. Device for the extraction of the condenser exhaust gases (5) of a boiling water reactor (1), which has two identical extraction systems (6, 7), one of which is always in stand-by as a backup, respectively consisting of

 a) an H$_2$-O$_2$ recombiner (9) with integrated catalyst (10), a downstream-connected exhaust gas condenser (12) and a vacuum pump (8) connected to the latter,

b) a preheater (11), connected upstream of the recombiner (9), which is connected via an auxiliary steam pipeline (14) to a turbine (2) of the boiling water reactor (1) and, via an extraction line (13), to the main condenser (3),

c) a vent tube (24), arranged inside the preheater (11), with orifices (28) for venting the heating steam (32) out of the auxiliary steam pipeline (14),

d) a shutoff element (15) arranged in the auxiliary steam pipeline (14), and a shutoff element (16) arranged in the extraction line (13),

characterized in that

e) a bypass (17) bypassing the shutoff element (15) of the auxiliary steam pipeline (14) is arranged at this shutoff element,

f) a throttle element (29) is arranged in the vent tube (24), downstream of the vent orifices (28), and

g) the vent tube (24) is functionally connected via an opening (31) to the recombiner (9).

**2.** Device according to Claim 1, characterized in that the throttle element (29) is designed as a multiple throttle.

**3.** Device according to Claim 2, characterized in that the multiple throttle (29) consists of a series circuit of orifices (30) which are arranged off-centre.

**4.** Device according to one or more of Claims 1 to 3, characterized in that a control valve (39) is arranged in the bypass (17).

**5.** Method for the extraction of condenser exhaust gases (5) of a boiling water reactor (1) according to Claim 1, in which

a) the first extraction system (6) is actively operated and the second extraction system (7) is kept in stand-by as a reserve, for which purpose the shutoff elements (15, 16) of the first extraction system (6) are opened and those of the second extraction system (7) are closed,

b) the recombiner (9) of the first extraction system (6) is heated by means of the condenser exhaust gases (5) flowing in from the main condenser (3), and these gases are heated by heat exchange with the heating steam (32) of the auxiliary steam pipeline (14), and

c) the recombiner (9) of the second extraction system (7) is continuously preheated,

characterized in that

d) a small quantity of heating steam (32) is continuously fed into the preheater (11) of the second extraction system (7),

e) this heating steam (32) is strongly heated in the preheater (11) by expansion and is subsequently throttled to the pressure prevailing in the recombiner (9),

f) the strongly heated heating steam (32) is fed into the recombiner (9) and the latter is thereby preheated,

g) the heating steam (32) is then condensed in a manner known per se in the downstream exhaust gas condenser (12) and fed back from there into the main condenser (3).

**6.** Method according to Claim 5, characterized in that the small quantity of heating steam (32) fed into the preheater (11) is previously fed past the shutoff element (15) arranged in the auxiliary steam pipeline (12) of the second extraction system (7).

**Revendications**

**1.** Dispositif pour l'aspiration des gaz d'échappement de condenseur (5) d'un réacteur nucléaire à eau bouillante (1), qui dispose de deux systèmes d'aspiration (6, 7) identiques, dont l'un se trouve toujours en réserve prêt à intervenir, se composant chacun de

a) un recombinateur $H_2$-$O_2$ (9) avec un catalyseur (10) intégré, un condenseur de gaz d'échappement (12) qui suit et une pompe d'aspiration (8) raccordée à ce dernier,

b) un préchauffeur (11) disposé avant le recombinateur (9), qui est raccordé à une turbine (2) du réacteur nucléaire à eau bouillante (1) par une ligne de vapeur auxiliaire (14) et au condenseur principal (3) par une conduite d'aspiration (13),

c) un tube de dégazage (24) disposé à l'intérieur du préchauffeur (11), avec des diaphragmes de dégazage (28) pour la vapeur de chauffage (32) venant de la ligne de vapeur auxiliaire (14),

d) un organe d'arrêt (15, 16) disposé dans la ligne de vapeur auxiliaire (14) et un disposé dans la conduite d'aspiration (13),

caractérisé en ce que

e) sur l'organe d'arrêt (15) de la ligne de vapeur auxiliaire (14) est disposé un bipasse (17) qui le contourne,

f) dans le tube de dégazage (24) un élément d'étranglement (29) est disposé en aval des diaphragmes de dégazage (28), et

g) le tube de dégazage (24) est activement relié au recombinateur (9) par une ouverture (31).

2. Dispositif suivant la revendication 1, caractérisé en ce que l'élément d'étranglement (29) est constitué par un étrangleur multiple.

3. Dispositif suivant la revendication 2, caractérisé en ce que l'étrangleur multiple (29) se compose d'un montage en série de diaphragmes (30), qui sont disposés en position excentrée.

4. Dispositif suivant une ou plusieurs des revendications 1 à 3, caractérisé en ce qu'une soupape de régulation (39) est disposée dans le bipasse (17).

5. Procédé pour l'aspiration des gaz d'échappement de condenseur (5) d'un réacteur nucléaire à eau bouillante (1) suivant la revendication 1, dans lequel

   a) le premier système d'aspiration (6) est en fonctionnement actif et le second système d'aspiration (7) est tenu prêt en réserve, les organes d'arrêt (15, 16) du premier système d'aspiration (6) étant à cet effet ouverts et ceux du second système d'aspiration (7) étant fermés,
   b) le recombinateur (9) du premier système d'aspiration (6) est chauffé au moyen des gaz d'échappement de condenseur (5) circulant en provenance du condenseur principal (3) et ceux-ci sont chauffés par échange de chaleur avec la vapeur de chauffage (32) de la ligne de vapeur auxiliaire (14), et
   c) le recombinateur (9) du second système d'aspiration (7) est préchauffé en permanence,

caractérisé en ce que

   d) une petite quantité de vapeur de chauffage (32) est introduite en permanence dans le préchauffeur (11) du second système d'aspiration (7),
   e) cette vapeur de chauffage (32) est fortement échauffée dans le préchauffeur (11) par dilatation et ensuite étranglée jusqu'à la pression régnant dans le recombinateur (9),
   f) la vapeur de chauffage (32) fortement chauffée est introduite dans le recombinateur (9) et préchauffe ainsi ce dernier,
   g) ensuite, la vapeur de chauffage (32) est précipitée de façon connue en soi dans le condenseur de gaz d'échappement (12) qui suit et elle est renvoyée de là dans le condenseur principal (3).

6. Procédé suivant la revendication 5, caractérisé en ce que la petite quantité de vapeur de chauffage (32) introduite dans le préchauffeur (11) est au préalable conduite le long de l'organe d'arrêt (15) disposé dans la ligne de vapeur auxiliaire (14) du second système d'aspiration (7).

FIG. 1

FIG. 5

**FIG. 2**

**FIG. 3**

**FIG. 4**